# FASCICULE DE BREVET EUROPEEN

(11) **EP 2 908 931 B1**
(45) Date de publication et mention de la délivrance du brevet: **07.03.2018**
(21) Numéro de dépôt: 13782752.3
(22) Date de dépôt: 24.09.2013
(51) Int. Cl.: B01J 8/00, B01J 8/06

(54) **SYSTEME PNEUMATIQUE DE CHARGEMENT DENSE DE CATALYSEUR DANS DES TUBES A BAIONNETTE POUR REACTEUR ECHANGEUR DE VAPOREFORMAGE**
PNEUMATISCHES SYSTEM FÜR DICHTE KATALYSATORBELADUNG IN BAJONETTRÖHREN FÜR EINEN DAMPFREFORMIERUNGSREAKTOR-TAUSCHER
PNEUMATIC SYSTEM FOR DENSE CATALYST LOADING IN BAYONET TUBES FOR A STEAM REFORMING REACTOR-EXCHANGER

(30) Priorité: 17.10.2012 FR 1202769
(43) Date de publication de la demande: 26.08.2015
(73) Titulaire: IFP Energies nouvelles, 92500 Rueil-Malmaison (FR)
(72) Inventeur: SANZ, Elena, 69005 Lyon (FR); BEAUMONT, Robert, 69140 Rillieux La Pape (FR); BOYER, Christophe, 69390 Charly (FR)
(86) Numéro de dépôt international: PCT/FR2013/052239
(87) Numéro de publication internationale: WO 2014/060668

(56) Documents cités:
- EP-A1- 1 749 568
- WO-A1-2007/039764
- WO-A1-2008/151139
- FR-A1- 2 789 050
- FR-A1- 2 950 822
- US-A1- 2009 257 849

## Description

### DOMAINE DE L'INVENTION

La présente invention se situe dans le domaine du chargement des tubes catalytiques utilisés dans des réacteurs tubulaires mettant en oeuvre des réactions fortement endothermiques ou fortement exothermiques. La présente invention est donc particulièrement adaptée au réacteur de vaporeformage de gaz naturel ou de diverses coupes hydrocarbonées en vue de la production du mélange CO+H₂ appelé gaz de synthèse.

On peut distinguer deux grandes familles de réacteurs de vaporeformage.

Les réacteurs dans lesquels la chaleur est apportée par un ensemble de brûleurs situés à l'intérieur du réacteur, et ceux dans lesquels la chaleur est apportée par un fluide caloporteur, généralement des fumées de combustion, ladite combustion ayant lieu à l'extérieur du réacteur de vaporeformage lui même.

Certains réacteurs de ce dernier type qu'on appelle dans la suite réacteur échangeur, font appel à des tubes simples. D'autres font appel à des tubes concentriques doubles également appelés tubes à baïonnette. Un tube à baïonnette peut se définir comme un tube intérieur entouré d'un tube extérieur coaxial au tube interne, l'espace annulaire compris entre le tube intérieur et le tube extérieur étant généralement rempli de catalyseur. Dans la suite du texte on parlera d'espace annulaire ou de zone catalytique pour désigner ledit espace annulaire défini par les tubes à baïonnette.

Dans le cadre de la présente invention, le gaz naturel, ou plus généralement la charge hydrocarbonée, est introduit(e) par la zone annulaire selon un écoulement de haut en bas, et les effluents réactionnels sont collectés dans la partie centrale du tube interne selon un écoulement de bas en haut.

La réaction de vaporeformage du gaz naturel pour la production d'hydrogène, est très endothermique et a donc généralement lieu dans des fours ou des réacteurs-échangeurs au sens précédemment défini.

La réaction a lieu a des températures très élevées, typiquement 900°C et sous pression, typiquement de 20 à 30 bars. Dans ces conditions, seule une mise en oeuvre de la réaction à l'intérieur de tubes peut être envisagée dans des conditions économiquement viables en raison de la tenue mécanique des matériaux.

Les réacteurs échangeurs catalytiques sont donc constitués d'une multitude de tubes, typiquement de l'ordre de 200 à 350 tubes pour des unités produisant 100 000 Nm³/h

Les réacteurs échangeurs catalytiques sont donc constitués d'une multitude de tubes, typiquement de l'ordre de 200 à 350 tubes pour des unités produisant 100 000 Nm³/h d'hydrogène, cet ensemble de tubes étant enfermé dans une calandre qui reçoit le fluide chaud permettant d'apporter les calories nécessaires à la réaction de vaporeformage.

Ce fluide chaud ou fluide caloporteur est généralement constitué par les fumées d'une combustion ayant lieu à l'extérieur du réacteur échangeur.

Le catalyseur doit donc être installé dans tous les tubes de vaporeformage de façon régulière d'un tube à l'autre, afin d'avoir une perte de charge identique d'un tube à l'autre.

Cette condition est très importante pour garantir une bonne répartition des réactifs sur l'ensemble des tubes catalytiques et éviter qu'un tube soit par exemple moins alimenté, ce qui pourrait conduire à une surchauffe importante du matériau constituant le tube, cette surchauffe réduisant d'autant la durée de vie du tube.

De même, il est important qu'aucun espace vide, c'est à dire sans catalyseur ou appauvri en catalyseur, ne subsiste dans un tube, car à nouveau le tube pourrait surchauffer localement, faute de réaction catalytique à l'intérieur. De plus, toute hétérogénéité dans la répartition du catalyseur dans la zone réactionnelle peut se traduire par un écoulement déséquilibré du ou des fluides réactionnels.

Le dispositif selon la présente invention vise donc un chargement à la fois dense et homogène entre chacun des tubes baïonnette faisant partie du réacteur échangeur.

### EXAMEN DE L'ART ANTERIEUR

Dans un four de reformage classique, le chargement traditionnel des tubes, qui ont un diamètre intérieur typique de 10 cm, se fait à l'aide des sachets remplis de catalyseur qui sont ouverts sur la surface du lit. Ce mode de chargement est connu de l'homme du métier sous l'appellation de chargement "à la chaussette" et est connu pour ne pas générer une importante densité de chargement.

Les tubes sont ensuite vibrés manuellement à coups de marteau ou par un système de vibration mécanique, pour favoriser la mise en place des grains de catalyseur, minimiser les espaces vides et ainsi augmenter la densité de chargement. Cependant, une vibration excessive peut conduire à la rupture des grains de catalyseur, et à une augmentation importante de la perte de charge.

Il est néanmoins difficile avec cette méthode de faire un chargement de bonne qualité, et il est généralement nécessaire de reproduire plusieurs fois l'opération de vibration pour parvenir à des pertes de charge voisines d'un tube à l'autre.

D'autres procédures et équipements améliorés ont été proposés sous le terme de technologie Unidense™ initialement développée par Norsk Hydro ou encore sous le terme de technologie Spiraload™ développée par Haldor Topsøe. Ces technologies s'appliquent à des tubes simples et non des tubes baïonnette.

Le brevet FR 2950822 de la demanderesse décrit une solution pour le chargement des tubes à baïonnette avec 3 tubes de chargement, avec freins mécaniques ou freinage pneumatique. Cette méthode de chargement permet un chargement dense et uniforme des tubes baïonnette. S'agissant d'une méthode "grain par grain", elle s'avère trop lente et peu adaptée pour une mise en oeuvre à l'échelle d'un réacteur industriel comportant plusieurs centaines de tubes.

De manière générale on peut dire que de nombreux documents existent dans le domaine du chargement de catalyseur dans les tubes de vaporeformage. La plupart d'entre eux font appel à des moyens de ralentissement souples ou à des obstacles rigides en forme de plan incliné. Mais aucun des documents retrouvés ne concerne une application aux tubes à baïonnette avec chargement d'une zone annulaire et évitement du tube central.

Le dispositif objet de la présente invention peut donc se définir comme un dispositif de chargement dense de catalyseur dans la zone annulaire de tube baïonnette équipant un réacteur échangeur de vaporeformage, le dispositif permettant un chargement homogène en densité dans chacun des tubes du réacteur échangeur en respectant une contrainte de temps compatible avec les impératifs d'un démarrage industriel.

De plus dans un certain nombre de cas, le dispositif selon l'invention doit pouvoir s'adapter à une variation de diamètre du tube externe, imposée par les contraintes mécaniques et thermiques qui évoluent le long du tube, donc à un changement de dimensions de la zone annulaire.

### DESCRIPTION SOMMAIRE DES FIGURES

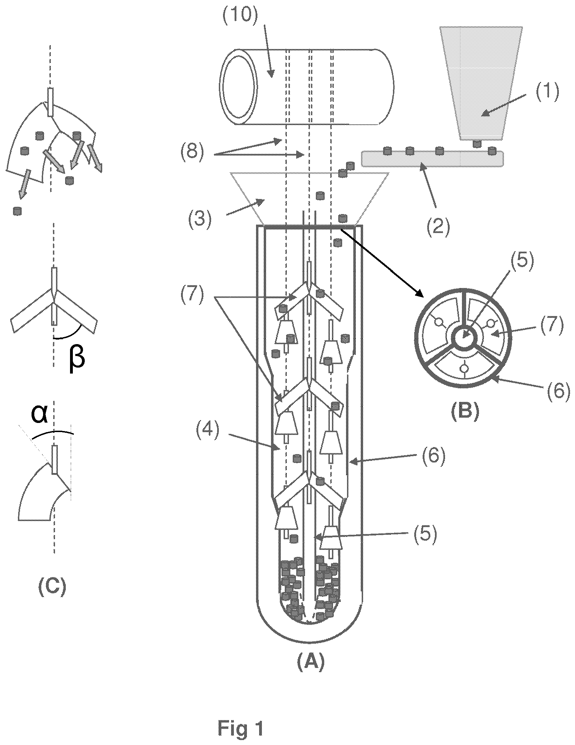

La figure 1 représente un dispositif selon l'invention dans le cas où la zone annulaire de chaque tube baïonnette est divisée en 3 secteurs de chargement de surfaces identiques formés par le système de maintien du tube central en partir supérieur du tube catalytique. Le dispositif comprend une trémie (1) commune pour les 3 secteurs, un tapis roulant (2) commun pour les 3 secteurs, un entonnoir (3) spécifique à chaque secteur ou commun aux trois secteurs, des déflecteurs (7) reliés par des chaines (8) à un enrouleur (10), ceci pour chacun des secteurs. Une vue de dessus du dispositif permet d'apprécier le taux d'occupation de la section horizontale d'un secteur par le déflecteur.
La figure 1 (A) est une vue de côté, la figure 1 (B) est une vue de dessus et la figure 1 (C) permet de comprendre la signification des angles α et β.
La figure 2 représente un dispositif selon la présente invention dans le cas où le tube interne (5) traverse latéralement le tube externe (6) en créant un coude en partie supérieure qui réduit la section de passage pour introduire le système de chargement.
   La traversée du tube externe (6) par le tube interne (5) oblige à mettre un place un dispositif qui est identique à celui qui serait utilisé dans le cas d'une zone annulaire divisée en deux secteurs de section identique.
La figure 2 (A) est une vue de côté, la figure 2 (B) est une vue de dessus et la figure 2 (C) permet de visualiser l'angle a.

### DESCRIPTION SOMMAIRE DE L'INVENTION

La présente invention peut se définir comme un dispositif de remplissage dense du catalyseur et un réacteur échangeur de vaporeformage consistant en une pluralité de tubes baïonnettes enfermés dans une calandre, chaque tube baïonnette comportant une zone annulaire au moins partiellement remplie de catalyseur. Ledit catalyseur est constitué de particules occupant au moins en partie l'espace annulaire (4) compris entre un tube interne (5) et un tube externe (6), l'ensemble de ces deux tubes constituant le tube baïonnette, la largeur dudit espace annulaire étant comprise entre 30 mm et 80 mm, et sa hauteur étant comprise entre 10 et 20 mètres.

Les particules de catalyseur ont généralement la forme de cylindres de hauteur approximativement 10 mm à 20 mm, et de diamètre approximativement 5 mm à 20 mm.

Le dispositif selon la présente invention consiste dans sa version de base en :
- un ensemble de déflecteurs (7) régulièrement répartis verticalement le long de l'espace annulaire (4) et séparés d'une distance verticale comprise entre 50 cm et 150 cm,
- lesdits déflecteurs (7) étant reliés entre eux par une chaine (8) qui s'enroule autour d'un enrouleur (10) situé à l'extérieur du tube à remplir, et les particules de catalyseur étant contenues dans
- une trémie centrale (1) permettant de délivrer les particules sur un tapis roulant ou un couloir vibrant (2) alimentant chaque secteur, par l'intermédiaire
- d'un entonnoir (3), par lequel s'écoulent les particules à l'intérieur de l'espace annulaire (4). Dans la version de base, l'espace annulaire (4) de chaque baïonnette n'est pas divisé et le dispositif de remplissage selon la présente invention occupe une portion de cet espace annulaire comprise entre 50% et 90%.

Dans d'autres variantes liés à l'existence d'un élément centreur du tube interne par rapport au tube externe, ou lié à la traversée du tube externe (6) par le tube interne (5), la zone annulaire (4) de chaque tube baïonnette est divisée en un certain nombre de secteurs d'aires sensiblement identiques s'étendant sur toute la longueur du tube. Généralement le nombre de secteurs sera de deux ou trois, et chaque secteur est alors équipé d'un système de déflecteurs tels que décrits dans la version de base. Ces systèmes de déflecteurs, un par secteur, forment alors le dispositif selon l'invention.

Un cas particulier particulièrement fréquent dans le domaine d'application du présent dispositif est celui dans lequel l'espace annulaire (4) est traversé dans sa partie supérieure par le tube interne (5) dont l'extrémité de sortie se situe à l'extérieur du tube externe (6).

Cette traversée du tube interne (5) constitue un obstacle et conduit à utiliser deux systèmes de déflecteurs en parallèle comme si l'espace annulaire était divisé en deux secteurs. Chaque déflecteur a sensiblement la forme d'une aile inclinée vers le bas d'un angle alpha (α) par rapport à la verticale compris entre 30° et 50°, chaque déflecteur occupant une portion de la surface horizontale du secteur comprise entre 50% et 90% de la dite surface du secteur.

Dans certains cas, on introduit de plus une pliure de l'aile selon une arrête radiale au sens où cette arrête se situe dans l'axe d'un rayon. La pliure est caractérisée par l'angle beta (β) que forme chaque demi-aile ainsi constituée avec la verticale. L'angle β peut prendre des valeurs comprises entre 20° et 75°, et préférentiellement comprise entre 30° et 60°.

Dans le cas où le diamètre de la paroi de l'espace annulaire (4) varie, en raison de portions de tube externe (6) de diamètre décroissant de haut en bas, le système de déflecteurs (7) s'adapte à cette variation de section en respectant toujours la condition d'occupation de la dite section horizontale dans la fourchette de 50% à 90% par un ajustement de l'angle alpha, la plus petite valeur étant adaptée à la portion de plus petit diamètre, et la plus grande valeur à la portion de plus grand diamètre, l'articulation de la pale du déflecteur sur son axe étant libre, et un second jeu de chaine permettant de relever plus ou moins l'extrémité de la pale du déflecteur de manière à faire varier l'angle alpha.

Toujours dans le cas où le diamètre de la paroi de l'espace annulaire (4) varie, en raison de portions de tube externe (6) de diamètre décroissant de haut en bas, le système de déflecteurs (7) peut être muni à ses extrémités les plus proches de la paroi de l'espace annulaire (4) de lèvres en caoutchouc souples qui permettent d'ajuster la longueur des pales en étant plus ou moins pliées, de manière à conserver le coefficient d'occupation de la section de l'espace annulaire. Une masse est alors ajoutée en bas de la chaine pour forcer le système à descendre dans la partie de plus petit diamètre de la zone annulaire (4).

La présente invention concerne également une méthode de chargement du catalyseur faisant appel au dispositif précédemment décrit, méthode qui peut se décomposer dans la série d'étapes suivantes :
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier déflecteur (7) atteigne une distance par rapport au fond du tube comprise entre 50 cm et 100 cm,
- le tapis roulant (2) est mis en route de manière à fournir un débit de solide compris entre 250 et 500 kg/h, solide qui est introduit dans la zone annulaire (4) ou un secteur de la dite zone annulaire (4) par l'intermédiaire de l'entonnoir (3),
- au fur et à mesure que le tube se remplit, le système de chargement est remonté de la zone annulaire (4) à l'aide de l'enrouleur externe (10), de manière à respecter une distance constante entre le premier déflecteur (7) et la surface du lit qui se constitue progressivement, ladite distance étant comprise entre 50 cm et 100 cm,
- le système est enroulé avec une vitesse équivalente à la vitesse de chargement du tube comprise entre 0,2 m / min et 0,4 m/mn,
- une fois le tube chargé et le système de chargement enroulé, le système est déplacé pour le chargement du tube suivant.

### DESCRIPTION DETAILLEE DE L'INVENTION

La présente invention peut se définir comme un dispositif permettant le chargement dense de catalyseur dans l'espace annulaire de tubes baïonnettes, chaque tube ayant une hauteur comprise entre 10 et 20 m, un diamètre du tube externe (6) compris entre 250 mm et 150 mm, et un diamètre du tube interne (5) compris entre 10 mm et 40 mm.

L'espace annulaire contenant le catalyseur a donc une largeur caractéristique d'environ 50 mm. Dans la pratique, selon les cas, la largeur caractéristique de l'espace annulaire pourra varier entre 30 et 80 mm.

De plus dans certains cas le tube externe (6) a un diamètre variable par tronçons qui vont en décroissant de haut en bas, ce qui signifie donc que la largeur caractéristique de l'espace annulaire diminue également en allant de haut en bas. Le dispositif selon l'invention doit donc s'adapter à ces variations de largeur caractéristique et conserver ses performances sur l'ensemble des tronçons.

Les grains de catalyseur ont la forme de cylindres d'environ 1 cm à 2 cm de hauteur et 0,5 cm à 2 cm de diamètre. Un des problèmes posés par leur chargement dans des tubes de plus de 15 mètres de longueur est le risque de casse de ces cylindres si on les faisait simplement tomber en chute libre sans aucune précaution, ce qui est une des solutions pour réaliser un chargement dense.

D'autres problèmes sont liés à la géométrie même de l'espace catalytique qui est donc annulaire, ce qui ne permet pas le passage des systèmes de chargement classiques.

De plus, le tube interne (5) de la baïonnette est généralement maintenu coaxial avec le tube externe (6) par au moins une pièce de centrage qui divise l'espace annulaire en plusieurs secteurs, ce qui interdit l'utilisation de tout dispositif qui entourerait le tube central.

Dans certains cas il faut également tenir compte du tube interne (5) qui traverse le tube externe (6) pour permettre une sortie totalement dégagée des effluents réactionnels.

Comme indiqué précédemment, le risque de formation de voûte est accentué lorsque le ratio entre le diamètre du tube et la dimension principale des particules est inférieur à 8, ce qui est souvent le cas dans le contexte de la présente invention, puisque la largeur typique de l'espace annulaire (50 mm) équivaut à environ 4 fois le diamètre caractéristique des particules de catalyseur.

Enfin, le chargement se faisant tube par tube (ou par groupe de deux à trois tubes alimentés en parallèle), il doit être suffisamment rapide pour une utilisation industrielle, car un réacteur de vaporeformage visant une production d'environ 100 000 Nm³/h d'H₂ compte de 200 à 350 tubes environ.

L'ensemble de ces contraintes est satisfait par le dispositif de remplissage dense selon la présente invention qu'on peut définir de la manière suivante:
La présente invention décrit un dispositif de remplissage dense du catalyseur dans un réacteur de vaporeformage consistant en une pluralité de tubes baïonnettes enfermés dans une calandre, le catalyseur étant constitué de grains solides occupant au moins en partie l'espace annulaire compris entre un tube interne et un tube externe, l'ensemble de ces deux tubes constituant un tube baïonnette. Le réacteur échangeur de vaporeformage auquel s'adresse la présente invention est constitué d'environ 300 tubes baïonnettes identiques d'une hauteur comprise entre 12 et 20 mètres, l'ensemble de ces tubes baïonnettes étant enfermé dans une calandre qui peut atteindre 10 mètres de diamètre.

La largeur de l'espace annulaire compris entre le tube interne et le tube externe d'un tube baïonnette est comprise entre 30 mm et 80 mm, et sa hauteur est comprise entre 12 et 20 mètres. Les particules de catalyseur ont généralement la forme de cylindres de hauteur approximativement 5 à 20 mm et de diamètre approximativement 10 à 20 mm.

L'espace annulaire ainsi défini peut être unique ou divisé en plusieurs secteurs sensiblement identiques par un système dit "centreur". Un secteur se définit donc comme une portion d'espace annulaire qui correspond à une fraction bien définie de la section annulaire et s'étend sur toute la hauteur dudit espace annulaire.

Le dispositif de remplissage selon l'invention consiste en:
- un ensemble de déflecteurs (7) régulièrement répartis verticalement et séparés d'une distance verticale comprise entre 50 cm et 150 cm, chaque déflecteur (7) occupant une portion de la section annulaire comprise entre 50% et 90%,
- lesdits déflecteurs (7) étant reliés entre eux par une chaine (8) qui s'enroule autour d'un enrouleur (10) situé à l'extérieur du tube à remplir, et les particules de catalyseur étant contenues dans
- une trémie centrale (1) permettant de délivrer les particules sur un tapis roulant ou un couloir vibrant (2) alimentant l'espace annulaire (4) (ou chaque secteur dudit espace annulaire lorsque celui ci est divisé en secteurs), par l'intermédiaire
- d'un entonnoir (3), par lequel s'écoulent les particules à l'intérieur de l'espace annulaire(4).

Le moyen de transport (2) des particules depuis la trémie centrale (1) jusqu'à l'entonnoir (3) peut être tout moyen de transport de particules solide connu de l'homme du métier.
Selon une première variante du dispositif de remplissage selon la présente invention, l'espace annulaire est divisé en deux ou trois secteurs sensiblement identiques, secteurs qui s'étendent sur toute la longueur du tube baïonnette au moyen d'un système dit "centreur" disposé en tête de l'espace annulaire, chaque secteur étant équipé d'un système de déflecteurs indépendant tel que décrit plus haut. Ceci revient à dire que le dispositif est alors constitué de deux ou trois systèmes identiques agissant en parallèle, chaque système de déflecteurs occupant un secteur de l'espace annulaire. Dans ce cas et de façon préférée, l'entonnoir (3) est spécifique à chacun des secteurs alors que le tapis roulant (2) et la trémie (1) sont communs aux trois secteurs.

Selon une seconde variante du dispositif de remplissage selon la présente invention, l'espace annulaire (4) est traversé dans sa partie supérieure par le tube interne (5) qui constitue un obstacle et conduit à utiliser deux systèmes de déflecteurs indépendants comme si l'espace annulaire était divisé en deux secteurs.

Chaque déflecteur (7) a la forme typique d'une aile inclinée vers le bas d'un angle alpha par rapport à la verticale compris entre 30° et 50°, chaque déflecteur occupant une portion de la surface horizontale du secteur comprise entre 50% et 90% de la dite surface du secteur.
Dans certains cas on introduit de plus une pliure de l'aile selon une arrête radiale au sens où cette arrête se situe dans l'axe d'un rayon. La pliure est caractérisée par l'angle beta (β) que forme chaque demi-aile ainsi constituée avec la verticale. L'angle β peut prendre des valeurs comprises entre 20° et 75°, et préférentiellement comprise entre 30° et 60°.

Selon une autre variante du dispositif de remplissage selon la présente invention, le diamètre de la paroi de l'espace annulaire varie, définissant des portions de tube de diamètre décroissant de haut en bas. Dans ce cas, le déflecteur s'adapte à cette variation de section en respectant toujours la condition d'occupation de la dite section horizontale dans la fourchette de 50% à 90% par un ajustement de l'angle alpha, la plus petite valeur de l'angle alpha étant adaptée à la portion de plus petit diamètre, et la plus grande valeur de l'angle alpha à la portion de plus grand diamètre. L'articulation de la pale du déflecteur sur son axe vertical devant être libre, un second jeu de chaine permettant de relever plus ou moins l'extrémité de la pale du déflecteur de manière à faire varier l'angle alpha.
Une autre solution pour tenir compte d'un diamètre de l'espace annulaire variable consiste à utiliser des déflecteurs munis à leurs extrémités les plus proches de la paroi de l'espace annulaire de lèvres en caoutchouc qui permettent d'ajuster la longueur des pales de manière à conserver le coefficient d'occupation de la section de l'espace annulaire (4).
Pour aider l'ensemble des déflecteurs dans leur descente, le frottement des prolongements en caoutchouc à la paroi de l'espace annulaire (4) pouvant rendre cette descente assez difficile, il est possible de munir les déflecteurs (7) de poids suspendus audit déflecteur.
La forme des déflecteurs peut être quelconque à condition que la surface projetée de cette forme dans un plan horizontal respecte le pourcentage d'occupation de la section horizontale de la zone annulaire ou du secteur, lorsque la dite zone annulaire est divisée en plusieurs secteurs.
Généralement un déflecteur a la forme d'une pale inclinée vers le bas d'un angle alpha compris entre 30° et 50° par rapport à la verticale.
On peut aussi citer à titre d'exemple un prolongement en caoutchouc souple du bord du déflecteur situé le plus près de la paroi interne de l'espace annulaire (4) qui permettrait de rester au contact de la dite paroi malgré sa variation de diamètre.
Dans le cas d'une division de l'espace annulaire en 3 secteurs verticaux identiques, la forme préférée du déflecteur est celle d'une aile épousant de manière sensiblement parallèle le secteur annulaire en respectant la condition d'occupation de la surface de la section horizontale dans les limites de 50% à 90%.

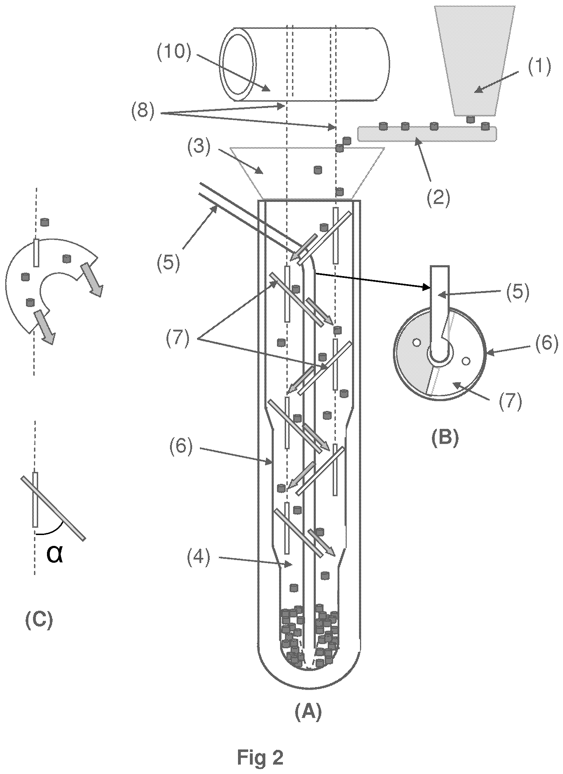

Dans le cas d'un espace annulaire (4) non divisé, mais occupé à son extrémité supérieure par le tube interne (5) traversant le tube externe (6), le dispositif selon la présente invention consiste en deux systèmes de déflecteurs parallèles et fonctionnant de manière indépendante. Ce système est exactement équivalent au cas d'un espace annulaire divisé en deux secteurs. Comme indiqué sur la figure 2, il est préférable d'alterner les deux systèmes de déflecteurs de manière à ce que la distance séparant deux déflecteurs consécutifs (mais n'appartenant pas à la même ligne du fait de cette alternance) soit comprise entre 25 cm et 75 cm.

Concernant la méthode de chargement faisant appel au dispositif tel que décrit précédemment, elle peut être décrite par les étapes suivantes :
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier déflecteur (7) atteigne une distance par rapport au fond du tube comprise entre 50 cm et 100 cm.
- le tapis roulant (2) est mis en route de manière à fournir un débit de solide compris entre 250 et 500 kg/h.
- au fur et à mesure que le tube est rempli, le système de chargement est remonté de la zone annulaire (4) à l'aide de l'enrouleur externe (10), de manière à respecter une distance constante entre le premier déflecteur et la surface du lit qui se constitue progressivement (on note premier déflecteur celui qui se trouve au point le plus bas lorsque le dispositif est déployé à la verticale). Cette distance est comprise entre 50 cm et 100 cm. Le système est donc enroulé avec une vitesse équivalente à la vitesse de chargement du tube comprise entre 0,2 m/min et 0,4 m/mn.
- pendant le chargement, la trémie (1) peut être re-remplie si son volume est plus faible que celui du tube. Cette opération peut se faire avec ou sans arrêt du chargement.
- une fois le tube chargé et le système de chargement enroulé, l'ensemble est déplacé pour le chargement du tube suivant.
Des opérations de vérification du chargement, faisant appel à des mesures de perte de charge entre deux points du tube baïonnette accompagnent l'opération de chargement mais ne font pas l'objet d'une description dans ce texte, étant considérées comme bien connues de l'homme du métier.

### EXEMPLE SELON L'INVENTION

L'exemple fourni correspond à un réacteur échangeur de vaporeformage permettant de produire 100 000 Nm3/h d'hydrogène.

Ce réacteur échangeur est muni de 300 tubes baïonnettes, enfermés dans une calandre de 10 m de diamètre.

Chaque tube baïonnette est constitué d'un tube externe (6) de diamètre 128,1 mm et d'un tube interne (5) de diamètre 42 mm. L'espace annulaire (4) a donc une dimension caractéristique de 43,05 mm. Cet espace annulaire est divisé en deux secteurs radiaux identiques s'étendant sur toute la longueur du tube, soit 14,5 m.

Chaque dispositif comprend pour chacun des deux secteurs 10 déflecteurs séparés d'une distance verticale de 1 m.

Un déflecteur est constitué d'une aile ayant sensiblement la forme d'un demi cercle avec un bord extérieur de diamètre 140 mm et un bord intérieur de diamètre 35 mm. Le taux d'occupation de la section du secteur est donc de 85%.

L'angle alpha d'inclinaison de chaque déflecteur par rapport à la verticale est de 45°.

Le chargement obtenu avec un tel système sur un tube de 12 m de hauteur est caractérisé par les paramètres suivants:
- Densité du lit : 960 kg / m3
- Temps de chargement total : 40 minutes (les deux systèmes de déflecteurs pour chaque secteur fonctionnant en parallèle)
- Variation de la perte de charge entre tubes par rapport à la moyenne sur 5 chargements successifs : ± 3 %.

## Revendications

1. Réacteur à tubes baïonnette et dispositif de remplissage dense du catalyseur spécialement adapté à un réacteur échangeur de vaporeformage consistant en une pluralité de tubes baïonnettes enfermés dans une calandre, le catalyseur étant constitué de particules occupant au moins en partie l'espace annulaire (4) compris entre un tube interne (5) et un tube externe (6), l'ensemble de ces deux tubes constituant un tube baïonnette, la largeur dudit espace annulaire étant comprise entre 30 mm et 80 mm, et sa hauteur comprise entre 10 et 20 mètres, les particules de catalyseur ayant la forme de cylindres de hauteur approximativement 10 mm à 20 mm et de diamètre approximativement 10 mm à 20 mm, le dit espace annulaire (4) étant divisé en deux ou trois secteurs horizontaux sensiblement identiques, et étant alimenté en particules par l'intermédiaire :
- d'une trémie centrale (1) permettant de délivrer les particules sur un tapis roulant ou un couloir vibrant (2), la trémie centrale (1) et le couloir vibrant (2) étant commun à l'ensemble des secteurs et alimentant l'espace annulaire (4), par l'intermédiaire
- d'un entonnoir (3), par lequel s'écoulent les particules à l'intérieur de l'espace annulaire (4), chaque secteur s'étendant sur toute la longueur du tube baïonnette, au moyen d'un système dit "centreur" disposé en tête de l'espace annulaire, chaque secteur étant équipé de son propre système de déflecteurs, chaque système de déflecteurs consistant en:
- un ensemble de déflecteurs (7) régulièrement répartis verticalement le long de l'espace annulaire (4) et séparés d'une distance verticale comprise entre 50 cm et 150 cm,
- lesdits déflecteurs (7) étant reliés entre eux par une chaine (8) qui s'enroule autour d'un enrouleur (10) situé à l'extérieur du tube à remplir et, chaque déflecteur (7) ayant la forme d'une aile inclinée vers le bas d'un angle alpha par rapport à la verticale compris entre 30° et 50°, et chaque déflecteur occupant une portion de la surface horizontale du secteur comprise entre 50% et 90% de la dite surface du secteur.

2. Réacteur à tube baïonnette et dispositif de remplissage selon la revendication 1, dans lequel l'espace annulaire (4) est traversé dans sa partie supérieure par le tube interne (5) qui traverse le tube externe (6), ce qui conduit à utiliser deux systèmes de déflecteurs (7) identiques et fonctionnant en parallèle, de manière équivalente au cas d'un espace annulaire divisé en deux secteurs.

3. Réacteur à tube baïonnette et dispositif de remplissage selon la revendication 1, dans lequel lorsque le diamètre de la paroi de l'espace annulaire (4) varie, en raison de portions de tube externe (6) de diamètre décroissant de haut en bas, le système de déflecteurs (7) s'adapte à cette variation de section en respectant toujours la condition d'occupation de la dite section horizontale dans la fourchette de 50% à 90% par un ajustement de l'angle alpha, la plus petite valeur étant adaptée à la portion de plus petit diamètre, et la plus grande valeur à la portion de plus grand diamètre, l'articulation de la pale du déflecteur sur son axe vertical étant libre, et un second jeu de chaine permettant de relever plus ou moins l'extrémité de la pale du déflecteur de manière à faire varier l'angle alpha.

4. Réacteur à tube baïonnette et dispositif de remplissage selon la revendication 1, dans lequel lorsque le diamètre de la paroi de l'espace annulaire (4) varie, en raison de portions de tube externe (6) de diamètre décroissant de haut en bas, le système de déflecteurs (7) est muni a ses extrémités les plus proches de la paroi de l'espace annulaire (4) de lèvres en caoutchouc qui permettent d'ajuster la longueur des pales de manière à conserver le coefficient d'occupation de la section de l'espace annulaire en cas de variation du diamètre interne du tube externe de la baïonnette.

5. Méthode de chargement du catalyseur dans le réacteur selon la revendication 1 et faisant appel au dispositif selon la revendication 1, **caractérisée par** la suite d'étapes suivantes :
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier déflecteur (7) atteigne une distance par rapport au fond du tube comprise entre 50 cm et 100 cm.
- le tapis roulant (2) est mis en route de manière à fournir un débit de solide compris entre 250 et 500 kg/h, solide qui est introduit dans la zone annulaire (4) ou un secteur de la dite zone annulaire (4) par l'intermédiaire de l'entonnoir (3),
- au fur et à mesure que le tube est rempli, le système de chargement est remonté de la zone annulaire (4) à l'aide de l'enrouleur externe (10), de manière à respecter une distance constante entre le premier déflecteur et la surface du lit qui se constitue progressivement, ladite distance étant comprise entre 50 cm et 100 cm.
- le système est enroulé avec une vitesse équivalente à la vitesse de chargement du tube comprise entre 0,2 mètre / min et 0,4 mètre/min.
- une fois le tube chargé et le système de chargement enroulé, le système est déplacé pour le chargement du tube suivant.

## Patentansprüche

1. Bajonettröhren-Reaktor und Vorrichtung zum dichten Befüllen des Katalysators, der speziell für einen Dampfreformierungsreaktor-tauscher ausgelegt ist, der aus mehreren Bajonettröhren besteht, die in einem Mantel eingeschlossen sind, wobei der Katalysator aus Teilchen besteht, die mindestens einen Teil des ringförmigen Raums (4) zwischen einem inneren Rohr (5) und einem äußeren Rohr (6) einnehmen, wobei die Anordnung dieser beiden Rohre ein Bajonettrohr bildet, wobei die Breite des ringförmigen Raums im Bereich zwischen 30 mm und 80 mm liegt, und seine Höhe im Bereich zwischen 10 und 20 Metern liegt, wobei die Katalysatorteilchen die Form von Zylindern mit einer Höhe von ungefähr 10 mm bis 20 mm und einem Durchmesser von ungefähr 10 mm bis 20 mm aufweisen, wobei der ringförmige Raum (4) in zwei oder drei im Wesentlichen identische horizontale Sektoren geteilt ist, und mit Teilchen versorgt wird mittels:
- eines zentralen Beschickungstrichters (1), der die Abgabe der Teilchen auf ein Förderband oder einen Schüttelförderer (2) ermöglicht, wobei der zentrale Beschickungstrichter (1) und der Schüttelförderer (2) von der Anordnung der Sektoren gemeinsam genutzt werden und den ringförmigen Raum (4) versorgen, mittels
- eines Trichters (3), durch den die Teilchen ins Innere des ringförmigen Raums (4) fließen, wobei sich jeder Sektor über die gesamte Länge des Bajonettrohrs erstreckt, mittels eines "Zentrierer" genannten Systems, das im oberen Teil des ringförmigen Raums angeordnet ist, wobei jeder Sektor mit seinem eigenen Deflektorensystem ausgestattet ist, wobei jedes Deflektorensystem aus Folgendem besteht:
- einer Anordnung von Deflektoren (7), die entlang des ringförmigen Raums (4) vertikal regelmäßig verteilt und durch einen vertikalen Abstand im Bereich zwischen 50 cm und 150 cm getrennt sind,
- wobei die Deflektoren (7) über eine Kette (8) miteinander verbunden sind, die um einen Aufroller (10) aufgewickelt wird, der außerhalb des zu füllenden Rohrs liegt, wobei jeder Deflektor (7) die Form eines mit einem Winkel alpha, bezogen auf die Vertikale, im Bereich zwischen 30° und 50°, nach unten geneigten Flügels aufweist und wobei jeder Deflektor einen Teil der horizontalen Oberfläche des Sektors im Bereich zwischen 50 % und 90 % der Oberfläche des Sektors einnimmt.

2. Bajonettröhren-Reaktor und Vorrichtung zum Befüllen nach Anspruch 1, wobei der ringförmige Raum (4) in seinem oberen Teil von dem inneren Rohr (5) durchdrungen wird, das das äußere Rohr (6) durchdringt, was zur Verwendung von zwei identischen Deflektorsystemen (7) führt, die im Fall eines ringförmigen Raums, der in zwei Sektoren geteilt ist, äquivalent parallel arbeiten.

3. Bajonettröhren-Reaktor und Vorrichtung zum Befüllen nach Anspruch 1, wobei sich, wenn der Durchmesser der Wand des ringförmigen Raums (4) aufgrund von Abschnitten des äußeren Rohrs (6) mit von oben nach unten abnehmendem Durchmesser variiert, das Deflektorensystem (7) an diese Variation des Querschnitts anpasst, indem es immer die Bedingung für die Belegung der horizontalen Sektion in der Bandbreite von 50 % bis 90 % durch eine Anpassung des Winkels alpha einhält, wobei der kleinste Wert für den Abschnitt mit dem kleinsten Durchmesser ausgelegt ist, und der größte Wert für den Abschnitt mit dem größten Durchmesser ausgelegt ist, wobei die Anlenkung der Schaufel des Deflektors um ihre vertikale Achse frei ist, und wobei es ein zweiter Kettensatz ermöglicht, das Ende der Schaufel des Deflektors mehr oder weniger weit anzuheben, um den Winkel alpha variieren zu lassen.

4. Bajonettröhren-Reaktor und Vorrichtung zum Befüllen nach Anspruch 1, wobei, wenn der Durchmesser der Wand des ringförmigen Raums (4) aufgrund von Abschnitten des äußeren Rohrs (6) mit von oben nach unten abnehmendem Durchmesser variiert, das Deflektorensystem (7) an seinen Enden, die am nächsten an der Wand des ringförmigen Raums (4) liegen, mit Gummilippen versehen ist, die es ermöglichen, die Länge der Schaufeln derart anzupassen, dass der Belegungskoeffizient der Sektion des ringförmigen Raums bei einer Variation des Innendurchmessers des äußeren Bajonettrohrs beibehalten wird.

5. Verfahren zum Laden des Katalysators in den Reaktor nach Anspruch 1, wobei die Vorrichtung nach Anspruch 1 verwendet wird, das durch die folgende Abfolge von Schritten gekennzeichnet ist:
- das Ladesystem wird zunächst auf den externen Aufroller (10) aufgewickelt, wobei der Beschickungstrichter (1) mit Feststoff gefüllt ist,
- das Ladesystem wird anschließend über seinen oberen Teil nach und nach in die ringförmige Zone (4) eingeführt, bis der erste Deflektor (7) einen Abstand in Bezug auf den Boden des Rohrs im Bereich zwischen 50 cm und 100 cm erreicht.
- das Förderband (2) wird in Gang gesetzt, um einen Feststoffdurchsatz im Bereich zwischen 250 und 500 kg/h zu liefern, wobei der Feststoff mittels des Trichters (3) in die ringförmige Zone (4) oder einen Sektor der ringförmige Zone (4) eingeführt wird,
- je mehr das Rohr gefüllt ist, umso weiter wird das Ladesystem von der ringförmigen Zone (4) mithilfe des externen Aufrollers (10) nach oben bewegt, um einen konstanten Abstand zwischen dem ersten Deflektor und der Oberfläche der Schicht einzuhalten, die sich nach und nach bildet, wobei der Abstand im Bereich zwischen 50 cm und 100 cm liegt,
- das System wird mit einer Geschwindigkeit gleich der Ladegeschwindigkeit des Rohrs im Bereich zwischen 0,2 Meter/Min. und 0,4 Meter/Min. aufgewickelt,
- wenn das Rohr beladen und das Ladesystem aufgewickelt ist wird das System zum Laden des nächsten Rohrs verlagert.

## Claims

1. A bayonet reactor and device for densely filling catalyst specially adapted to a steam reforming exchanger-reactor consisting of a plurality of bayonet tubes enclosed in a shell, the catalyst being constituted by particles occupying at least part of the annular space (4) included between an internal tube (5) and an external tube (6), the assembly of these two tubes constituting a bayonet tube, the width of said annular space being in the range 30 mm to 80 mm, and its height being in the range 10 to 20 metres, the catalyst particles being in the form of cylinders with an approximate height of 10 mm to 20 mm and an approximate diameter of 10 mm to 20 mm, said annular space (4) being divided into two or three substantially identical horizontal sectors, and being fed particles via:
- a central feed hopper (1) for delivering the particles onto a conveyor belt or a shaker conveyor (2), the central feed hopper (1) and the shaker conveyor (2) being common to the sectors and supplying the annular space (4), via
- a funnel (3), via which the particles flow into the interior of the annular space (4), each sector extending the entire length of the bayonet tube, by means of a "centralizer" system disposed at the head of the annular space, each sector being equipped with its own system of deflectors, each system of deflectors consisting of:
- a series of deflectors (7) distributed in a regular vertical manner along the annular space (4) and separated by a vertical distance in the range 50 cm to 150 cm;
- said deflectors (7) being connected together via a chain (8) which winds around a spooler (10) located outside the tube to be filled, and each deflector (7) being in the form of a vane which is downwardly inclined at an angle alpha with respect to the vertical in the range 30° to 50°, each deflector occupying a portion of the horizontal surface area of the sector in the range 50% to 90% of said surface area of the sector.

2. The bayonet reactor and filling device according to claim 1, in which the upper portion of the annular space (4) is traversed by the internal tube (5) which traverses the external tube (6), which results in the use of two identical systems of deflectors (7) operating in parallel, in a manner equivalent to the case of an annular space divided into two sectors.

3. The bayonet reactor and filling device according to claim 1, in which when the diameter of the wall of the annular space (4) varies because portions of the external tube (6) have diameters which decrease from top to bottom, the system of deflectors (7) adapts itself to this variation in section, always satisfying the condition of occupation of said horizontal section in the range of 50% to 90% by adjusting the angle alpha, the smallest value being adapted to the portion with the smallest diameter and the largest value to the portion with the largest diameter, the articulation of the blade of the deflector about its axis being free, and a second set of chains allowing the end of the blade of the deflector to be lifted to a greater or lesser extent in order to vary the angle alpha.

4. The bayonet reactor and filling device according to claim 1 in which, when the diameter of the wall of the annular space (4) varies because portions of the external tube (6) have diameters which decrease from top to bottom, the system of deflectors (7) is provided, at its ends closest to the wall of the annular space (4), with lips formed from rubber which can be used to adjust the length of the blades in order to conserve the coefficient of occupation of the section of the annular space in the case in which the internal diameter of the external tube of the bayonet is varied.

5. A method for loading catalyst in the bayonet reactor according to claim 1 and using the device according to claim 1, **characterized by** the following series of steps:
• the loading system is initially wound into the external spooler (10), the feed hopper (1) being filled with solid;
• the loading system is then gradually introduced into the annular zone (4) via its upper portion until the first deflector (7) reaches a distance with respect to the bottom of the tube in the range 50 cm to 100 cm;
• the conveyor belt (2) is started up so as to provide a flow rate of solid in the range 250 to 500 kg/h, which solid is introduced into the annular zone (4) or a sector of said annular zone (4) via the funnel (3);
• as and when the tube is filled, the loading system is raised from the annular zone (4) with the aid of the external spooler (10) in a manner such as to keep a constant distance between the first deflector (7) and the surface of the bed which is gradually being constituted, said distance being in the range 50 cm to 100 cm;
• the system is wound up at a speed equivalent to the speed of loading of the tube, in the range 0.2 metre/min to 0.4 metre/min;
• once the tube has been loaded and the loading system wound up, the system is displaced in order to load the next tube
